# EUROPEAN PATENT APPLICATION

(11) **EP 2 874 239 A1**
(43) Date of publication of application: **20.05.2015**
(21) Application number: 14189975.7
(22) Date of filing: 23.10.2014
(51) Int. Cl.: H01R 13/03, C25D 5/12, C25D 5/50, C23C 28/02, H01B 1/02

(54) **Tin-plated copper-alloy terminal material**

(30) Priority: 30.10.2013 JP 2013225843; 26.08.2014 JP 2014171316
(71) Applicant: Mitsubishi Materials Corporation, Chiyoda-ku Tokyo 100-8117 (JP)
(72) Inventor: Inoue, Yuki, Naka-shi, Ibaraki 311-0102 (JP); Kato, Naoki, Naka-shi, Ibaraki 311-0102 (JP)
(74) Representative: Gille Hrabal

(57) **Abstract**

Tin-plated copper-alloy terminal material including a base material made of Cu alloy; a Sn-based surface layer formed on a surface of the base material and having an average thickness of 0.2 µm or larger and 0.6 µm or smaller; a Cu-Sn alloy layer generated between the Sn-based surface layer and the base material; and a Ni-based coating layer at an uppermost surface, formed of Ni or Ni-Sn alloy having a coating thickness of 0.005 µm or larger and 0.05 µm or smaller, in which an oil-sump depth Rvk of the Cu-Sn alloy layer measured when the Cu-Sn alloy layer is appeared on a surface by fusing and removing the Sn-based surface layer is 0.2 µm or larger; a part of the Cu-Sn alloy layer is exposed from the Sn-based surface layer; the Ni-based coating layer is formed on the exposed Cu-Sn alloy layer from the Sn-based surface layer; and dynamic friction coefficient of the surface is 0.3 or less.

## Description

### BACKGROUND OF THE INVENTION

### Field of the Invention

The present invention relates to tin-plated copper-alloy terminal material that is useful for a terminal for a connector used for connecting electrical wiring of automobiles or personal products, and in particular, which is useful for a terminal for a multi-pin connector.

Priority is claimed on Japanese Patent Application No. 2013-225843, filed October 30, 2013 and Japanese Patent Application No. 2014-171316, filed August 26, 2014, the content of which is incorporated herein by reference.

### Description of the Related Art

Recently, along with multi-functionalizing and highly-integration of electric equipment in automobiles, it is remarkable to use connector terminals being downsized and of higher-pin-counts. For the connectors, tin-plated copper-alloy material is broadly used; however, there is concern that productivity may be deteriorated owing to an increase of frictional resistance when inserting the terminals by increase of the pin of the connector. Accordingly, it is attempted to reduce insertion force of a pin by reducing a friction coefficient of tin-plated copper-alloy material.

For example, in Japanese Unexamined Patent Application, First Publication No. 2007-100220 (Patent Document 1), it is described that tin-plated copper-alloy material has a crystalline structure which is differ from that of tin on an outermost surface thereof so as to reduce the insertion force; nevertheless there are problems that contact resistance is increased, or soldering wettability is deteriorated.

In Japanese Unexamined Patent Application, First Publication No. 2005- 154819 (Patent Document 2), it is described that a surface-plated layer is made by reflowing or thermal diffusion of a Sn-plated layer and a plated layer including Ag or In.

In Japanese Unexamined Patent Application, First Publication No. 2010-61842 (Patent Document 3), it is described that a Sn-Ag alloy layer is made by forming an Ag-plated layer on a Sn-plated layer and heat-treating.

Such technique as in Patent Documents 2 and 3 is to perform Sn-Ag alloy plating or Ag plating or the like on an entire surface, and so costs are increased.

Here, insertion force F of a connector is F = 2 × µ × P when P is a pressure force of a female terminal pressing a male terminal and "µ" is a dynamic friction coefficient, because the male terminal is held between the two female terminals. In order to decrease the F, it is effective to decrease the P. However, the pressure force cannot be decreased enough for maintaining electrical-connection reliability of the male-female terminals while being engaged; the pressure force needs at least 3 N. In multi-pin connectors, even though there is a case in which one connector has 50 pins or more, it is desirable that the insertion force of an entire connector be 100 N or lower, if possible, 80 N or lower, or 70 N or lower, so that it is necessary for the dynamic friction coefficient to be 0.3 or lower.

### SUMMARY OF THE INVENTION

### Problems to be Solved by the Invention

Terminal material is developed so that frictional resistance at a surface layer is decreased than conventional one. However, in connecting terminals in which the male and female terminals are engaged, there are not many cases that the male and female terminals are made from the same material; particularly for the male terminal, all-purpose Sn-plated terminal material made of brass as base material is widely used. Therefore, there is a problem that effect of decreasing the insertion force is small even if only the female terminal is made of terminal material of low-insertion force.

The present invention is achieved in consideration of the above circumstances, and has an object to provide tin-plated copper-alloy terminal material in which an insertion force for fitting can be decreased also for terminals made of all-purpose Sn-plated terminal material.

### Means for Solving the Problem

The inventors found a means to decrease frictional resistance at a surface layer of terminal material, that is, a friction coefficient was decreased by controlling a shape of an interface between a Cu-Sn alloy layer and a Sn-based surface layer and arranging the Cu-Sn alloy layer having precipitous asperity directly under the Sn-based surface layer. However, if this terminal material of low-insertion force is used for only one of the terminals and the other is made of all-purpose Sn-plated material, reduction effect of the friction coefficient was decreased by half.

Since both uppermost surfaces are Sn-plated, the reduction effect of the friction coefficient is deteriorated by adhesion of Sn owing to contact of Sn with each other of the same kind. Particularly, it is supposed that in the terminal material of low-insertion force, the adhesion occurs by shaving Sn at the soft Sn-based surface layer of the all-purpose Sn-plated material since the hard Cu-Sn alloy layer is arranged directly under the Sn-based surface layer.

The inventors found by intensive research that by forming a thin Ni plate on an uppermost surface, the reduction effect of the friction coefficient of the terminal material of low-insertion force can be maintained, the adhesion of Sn can be restrained, and it is possible to reduce the frictional resistance even if the other terminal is made of all-purpose material.

A tin-plated copper-alloy terminal material according to the present invention includes: a base material made of Cu alloy; a Sn-based surface layer being formed on a surface of the base material and having an average thickness of 0.2 µm or larger and 0.6 µm or smaller; a Cu-Sn alloy layer generated between the Sn-based surface layer and the base material; and a Ni-based coating layer at an uppermost surface, being formed of Ni or Ni-Sn alloy having a coating thickness of 0.005 µm or larger and 0.05 µm or smaller, in which dynamic friction coefficient of the surface is 0.3 or lower, and an oil-sump depth Rvk of the Cu-Sn alloy layer measured when the Cu-Sn alloy layer is appeared on a surface by melting and removing the Sn-based surface layer is 0.2 µm or larger.

The dynamic friction coefficient can be 0.3 or less by forming: the Cu-Sn alloy layer to have the oil-sump depth Rvk of 0.2 µm or larger; the Sn-based surface layer to have the average thickness of 0.2 µm or larger and 0.6 µm or smaller; and the Ni-based coating layer at the uppermost surface to have the coating thickness of 0.005 µm or larger and 0.5 µm or smaller.

If the oil-sump depth Rvk of the Cu-Sn alloy layer is smaller than 0.2 µm, the dynamic friction coefficient is increased since Sn is decreased in concavities of the Cu-Sn alloy layer. The reason to set the average thickness of the Sn-based surface layer is 0.2 µm or larger and 0.6 µm or smaller is that: if it is smaller than 0.2 µm, soldering wettability and electrical-connection reliability are deteriorated; or if it is larger than 0.6 µm, the oil-sump depth Rvk of the Cu-Sn alloy layer cannot be 0.2 µm or larger, so a thickness in Sn becomes larger, and as a result, the dynamic friction coefficient is increased.

The reduction effect of dynamic coefficient can be higher at the Ni-based coating layer made from the uppermost Ni or Ni-Sn alloy than at the Cu-Sn alloy layer since the adhesion with Sn is less likely to occur. In this case, the effect cannot be obtained if the coating thickness of the Ni-based coating layer is smaller than 0.005 µm. If the coating thickness of the Ni-based coating layer exceeds 0.05 µm, the reduction effect of friction coefficient by a peculiar shape of an interface between the Sn-based surface layer and the Cu-Sn alloy layer and restraint effect of Sn-adhesion by the Ni-based coating layer are not obtained at the same time: accordingly, the reduction effect of friction coefficient cannot be obtained enough since only the restraint effect by the Ni-based coating layer functions; and the soldering wettability may be deteriorated.

In the tin-plated copper-alloy terminal material according to the present invention, it is preferable that: a part of the Cu-Sn alloy layer is exposed from the Sn-based surface layer; and the Ni-based coating layer is formed on the Cu-Sn alloy layer exposed from the Sn-based surface layer.

The Ni-based coating layer is formed on the Cu-Sn alloy layer so as to be held by the hard Cu-Sn alloy layer exposed on a surface of the Sn-based surface layer. If it is not formed on the Cu-Sn alloy layer but formed only on the Sn-based surface layer, the Ni-based coating layer is broken when the terminal materials are rubbed together; as a result, the adhesion of Sn occurs by contacting Sn of the same kind with each other, so that the reduction effect of friction coefficient cannot be obtained. The Ni-based coating layer may be formed on the Sn-based surface layer; and furthermore, it is necessary at least to be formed on the Cu-Sn alloy layer.

In the tin-plated copper-alloy terminal material according to the present invention, it is preferable that an average thickness of the Cu-Sn alloy layer be 0.6 µm or larger and 1 µm or smaller.

If the average thickness of the Cu-Sn alloy layer is smaller than 0.6 µm, it is difficult for the oil-sump depth Rvk to be 0.2 µm or larger. On the other hand, if forming the Cu-Sn alloy layer to have the thickness larger than 1 µm, it is uneconomic since the Sn-based surface layer is formed to be thicker than necessary.

In the tin-plated copper-alloy terminal material according to the present invention, it is preferable that the base material include 0.5 mass% or more and 5 mass% or less of Ni, 0.1 mass% or more and 1.5 mass% or less of Si, and further include as necessary one or more selected from a group consisting of Zn, Sn, Fe, and Mg at 5 mass% or less in total, and the balance Cu with inevitable impurities.

In order to form the Cu-Sn-based surface layer to have the oil-sump depth Rvk of 0.2 µm or larger, it is necessary to dissolve Ni and Si in the Cu-Sn alloy layer. In this case, if a base material including Ni and Si is used, it is possible to supply Ni and Si into the Cu-Sn alloy layer from the base material while reflowing. However, if Ni content is less than 0.5 mass% and Si content is less than 0.1 mass% in the base material, Ni and Si cannot be effective; if Ni exceeds 5 mass%, there is a risk that breakage occurs when casting or hot-rolling; if Si exceeds 1.5 mass%, electrical conductivity is deteriorated. Accordingly, it is desirable that Ni be 0.5 mass% or more and 5 mass% or less, and Si be 0.1 mass% or more and 1.5 mass% or less.

It is proper to add Zn and Sn for improving strength and thermal-resistance. Also, it is proper to add Fe and Mg for improving stress-relaxation characteristic. However, it is not desirable to exceed 5 mass% in total since the electrical conductivity is deteriorated.

### Effects of the Invention

According to the tin-plated copper-alloy terminal material of the present invention, by forming a Ni-based coating layer formed of Ni or Ni-Sn alloy having a coating thickness of 0.05 µm or less at an uppermost surface of a terminal material of low-insertion force in which asperity shape of an interface between a Cu-Sn alloy layer and a Sn-based surface layer is controlled, even though all-purpose Sn-plated material is used by combination, the insertion force of fitting can be decreased.

### BRIEF DESCRIPTION OF THE DRAWING

FIG. 1 is a cross-sectional view schematically showing tin-plated copper-alloy terminal material according to the present invention.
FIG. 2 is a cross-sectional view of a fitting part showing an example of a fitting-connection terminal in which terminal material of the present invention is applied.
FIG. 3 is a cross-sectional view schematically showing terminal material used for a male terminal.
FIG. 4 is a frontal view conceptually showing a device for measuring dynamic friction coefficient.
FIG. 5 is a photomicrograph showing a surface of a test piece of a male terminal of Example 5 after measuring dynamic friction coefficient.
FIG. 6 is a photomicrograph showing a surface of a test piece of a male terminal of Comparative Example 1 after measuring dynamic friction coefficient.
FIG. 7 is a photomicrograph showing a surface of a test piece of a male terminal of Comparative Example 2 after measuring dynamic friction coefficient.
FIG. 8A is a photograph showing an element distribution at an uppermost surface of a terminal material by Auger Electron Spectroscopy (AES) analysis after removing oxide on a surface by etching.
FIG. 8B is a photograph showing an element distribution at an uppermost surface of the terminal material by AES analysis after removing a Ni-based coating layer by etching.
FIG. 9 is a photograph showing a vicinity of an uppermost surface of a terminal material by Transmission Electron Microscopy (TEM) analysis.

### DETAILED DESCRIPTION OF THE INVENTION

An embodiment of tin-plated copper-alloy terminal material according to the present invention will be explained.

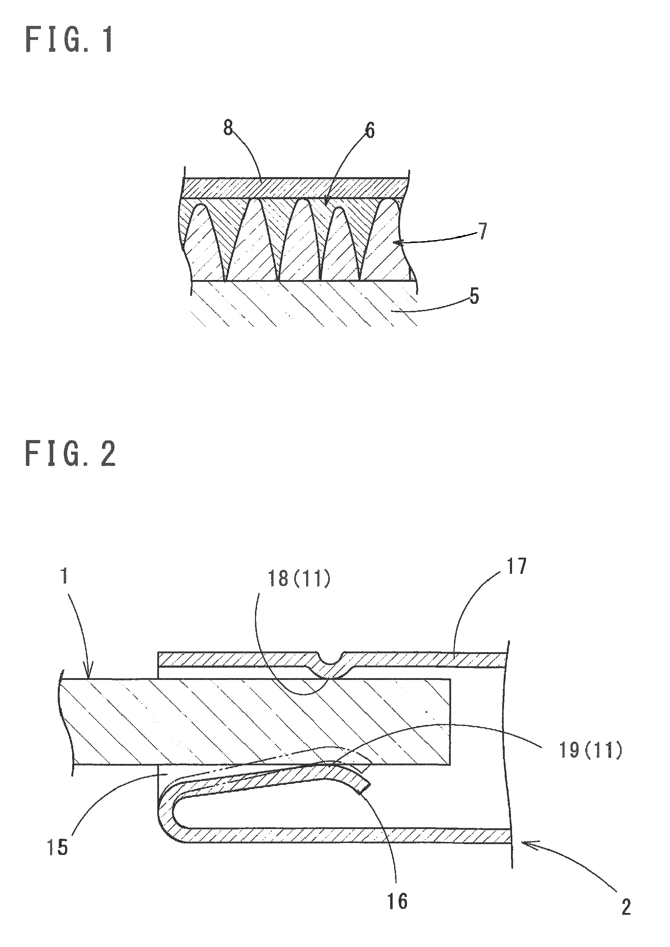

As shown in a schematically view of FIG. 1, in this tin-plated copper-alloy terminal material: a Sn-based surface layer 6 is formed on a surface of a base material 5 made from Cu alloy; a Cu-Sn alloy layer 7 is formed between the Sn-based surface layer 6 and the Cu-alloy base material 5. When the Sn-based surface layer 6 is fused and removed, the Cu-Sn alloy layer 7 appears on a surface, and an oil-sump depth Rvk of the Cu-Sn alloy layer 7 is measured 0.2 µm or larger. An average thickness of the Sn-based surface layer 6 is 0.2 µm or larger and 0.6 µm or smaller. A Ni-based coating layer 8 made of Ni or Ni-Sn alloy having a coating thickness of 0.005 µm or larger and 0.05 µm or smaller is formed on an uppermost surface. Dynamic friction coefficient of the surface is 0.3 or lower.

In this case, a part of the Cu-Sn alloy layer 7 is exposed from the Sn-based surface layer 6. The Ni-based coating layer 8 is formed on the exposed part of the Cu-Sn alloy layer 7 exposed from the Sn-based surface layer 6 or an region including the exposed part of the Cu-Sn alloy layer 7 and the vicinity thereof in the Sn-based surface layer 6.

The base material 5 is copper alloy including Ni and Si as Cu-Ni-Si-based alloy, Cu-Ni-Si-Zn-based alloy and the like, further including as necessary one or more selected from a group consisting of Zn, Sn, Fe, and Mg at 5 mass% or less in total; and the balance Cu with inevitable impurities. Ni and Si are essential components for supplying Ni and Si from the base material 5 while reflowing as stated below and dissolving Ni and Si in the Cu-Sn alloy layer 7 in order to make the oil-sump depth Rvk to be 0.2 µm or larger of the Cu-Sn alloy layer 7 made by reflowing. It is preferable that: Ni content be 0.5 mass% or more and 5 mass% or less; and Si content be 0.1 mass% or more and 1.5 mass% or less in the base material 5. If Ni is less than 0.5 mass%, effectiveness of Ni cannot appear; if Si is less than 0.1 mass%, effectiveness of Si cannot appear; moreover, if Ni exceeds 5 mass%, there is a risk that breakage occurs when casting or hot-rolling; and if Si exceeds 1.5 mass%, electrical conductivity is deteriorated.

Zn and Sn improve strength and thermal-resistance. Fe and Mg improve stress-relaxation characteristic. In a case in which any one or more of Zn, Sn, Fe, and Mg are added, it is not desirable that total content amount exceed 5 mass% since the electrical conductivity is deteriorated. Particularly, it is preferable that Zn, Sn, Fe, and Mg are all included.

The Cu-Sn alloy layer 7 is formed by reflowing the base material 5 on which a Cu-plated layer and Sn-plated layer are formed as mentioned below. Most part of the Cu-Sn alloy layer 7 is Cu₆Sn₅. In a vicinity of an interface between the base material 5, a (Cu, Ni, Si)₆Sn₅ alloy in which a part of Cu is substituted for Ni, Si in the base material 5 is thinly formed. The interface of the Cu-Sn alloy layer 7 and the Sn-based surface layer 6 is formed uneven so that the oil-sump depth Rvk is 0.2 µm or larger.

The oil-sump depth Rvk is an average depth of remarkable troughs in a surface-roughness curve regulated by JIS B0671-2. The oil-sump depth Rvk is an index indicating an extent of deeper parts than average unevenness. If the value is large, it is indicated that the unevenness is steep by existence of very deep trough.

An average thickness of the Cu-Sn alloy layer 7 is preferably 0.6 µm or larger and 1 µm or smaller. If it is smaller than 0.6 µm, it is difficult to make the oil-sump depth Rvk of the Cu-Sn alloy layer 7 to 0.2 µm or larger. It is set to 1 µm or smaller because it is wasteful if it is formed to have thickness larger than 1 µm because the Sn-based surface layer 6 should be formed thicker than necessary.

A part of the Cu-Sn alloy layer 7 (Cu₆Sn₅) is exposed from the Sn-based surface layer 6. In this case, an equivalent-circle diameter of the exposed parts is 0.6 µm or larger and 2.0 µm or smaller and an exposed-area rate is 10% or more and 40% or less. In the limited extent, an excellent electrical-connection characteristic of the Sn-based surface layer 6 is not deteriorated.

An average thickness of the Sn-based surface layer 6 is set to 0.2 µm or larger and 0.6 µm or smaller. If the thickness is less than 0.2 µm, soldering wettability and the electrical-connection reliability may be deteriorated; and if it exceeds 0.6 µm, a surface layer cannot be composite construction of Sn and Cu-Sn and may be filled only by Sn, so that the dynamic friction coefficient is increased. More preferred average thickness of the Sn-based surface layer 6 is 0.25 µm or larger and 0.5 µm or smaller.

The Ni-based coating layer 8 is made from Ni or Ni-Sn alloy, and as mentioned below, formed on the exposed parts of the Cu-Sn alloy layer 7 exposed from the Sn-based surface layer 6 after reflowing or on the vicinity of the exposed parts in the Sn-based surface layer 6 so as to have the coating thickness of 0.005 µm or larger and 0.05 µm or smaller. However, the Ni-based coating layer 8 is not formed on an entire surface of the uppermost surface, but mainly formed on the exposed parts on the Cu-Sn alloy layer 7 exposed from the Sn-based surface layer 6. Accordingly, the Sn-based surface layer 6 and the Ni-based coating layer 8 are mixed on the uppermost surface. In this case, most of the exposed parts of the Cu-Sn alloy layer 7 sprinkled over the Sn-based surface layer 6 are coated by the Ni-based coating layer 8; however, it is not necessary to completely coat the exposed parts by the Ni-based coating layer 8. There may be a few parts in an exposed state without being coated by the Ni-based coating layer 8.

If the Ni-based coating layer 8 is formed only on the Sn-based surface layer 6 and not formed on the exposed parts of the Cu-Sn alloy layer 7, the Ni-based coating layer 8 is broken by friction between the terminal materials, so that reduction effect of friction coefficient cannot be obtained since an adhesion of Sn occurs by contacting Sn of the same kind with each other.

In this case, the result cannot be obtained if the coating thickness of the Ni-based coating layer 8 is smaller than 0.005 µm. If the coating thickness exceeds 0.05 µm, the reduction effect of friction coefficient by a peculiar shape of the interface between the Sn-based surface layer 6 and the Cu-Sn alloy layer 7 and restraint effect of Sn-adhesion by the Ni-based coating layer 8 are not obtained at the same time: accordingly, the reduction effect of friction coefficient cannot be obtained enough since only the restraint effect by the Ni-based coating layer 8 functions; and the soldering wettability may be deteriorated.

Next, a manufacturing method of this terminal material will be explained.

As a base material, a plate material made of copper alloy is prepared that includes Ni and Si as Cu-Ni-Si-based alloy, Cu-Ni-Si-Zn-based alloy and the like, further includes as necessary one or more selected from a group consisting of Zn, Sn, Fe, and Mg at 5 mass% or less in total; and the balance Cu with inevitable impurities. A surface of the plate material is purified by degreasing, acid-cleaning and the like, and then Cu-plating and Sn-plating are carried out in order.

In Cu-plating, an ordinary Cu-plating bath can be used; for example, a copper-sulfate plating-bath or the like containing copper sulfate (CuSO₄) and sulfuric acid (H₂SO₄) as major ingredients can be used. Temperature of the plating bath is set to 20°C or higher to 50°C or lower; and current density is set to 1 A/dm² or higher and 20 A/dm² or lower. A coating thickness of the Cu-plating layer made by the Cu-plating is set to 0.03 µm or larger and 0.15 µm or smaller. If it is smaller than 0.03 µm, an alloy-base material has a significant influence, so that the Cu-Sn alloy layer grows to the surface layer, glossiness and the soldering wettability are deteriorated; or if it exceeds 0.15 µm, Ni cannot be supplied enough from the base material while reflowing, so that the desired shape of the Cu-Sn alloy layer cannot be made.

As a plating bath for making the Sn-plating layer, an ordinary Sn-plating bath can be used; for example, a sulfate bath containing sulfuric acid (H₂SO₄) and stannous sulfate (SnSO₄) as major ingredients can be used. Temperature of the plating bath is set to 15°C or higher to 35°C or lower; and current density is set to 1 A/dm² or higher to 10 A/dm² or lower. A coating thickness of the Sn-plating layer is set to 0.6 µm or larger and 1.3 µm or smaller. If the thickness of the Sn-plating layer is smaller than 0.6 µm, the Sn-based surface layer is thin after reflowing, so that the electrical connection-characteristic is deteriorated; or if it exceeds 1.3 µm, the exposure of the Cu-Sn alloy layer at the surface is reduced, so that it is difficult to suppress the dynamic friction coefficient to 0.3 or lower.

As the condition for the reflow treatment, the base material is heated for 3 seconds or longer and 15 seconds or shorter in a reduction atmosphere under a condition of surface temperature is 240°C or higher and 360°C or lower, and then the base material is rapidly cooled. If the temperature is lower than 240°C and a heating time is shorter than 3 seconds, fusion of Sn is not advanced: if the temperature exceeds 360°C and the heating time is longer than 15 seconds, the desired shape cannot be obtained since crystal in the Cu-Sn alloy layer grows large, and since the Sn-based surface layer is not remained since the Cu-Sn alloy layer reaches the surface layer. It is preferable to rapid cool after heating at 260°C or higher and 300°C or lower for 5 seconds or longer and 10 seconds or shorter.

Degreasing, acid-cleaning or the like are carried out on raw material after reflowing, and then a Ni-plating is carried out on a surface after purifying. An ordinary Ni-plating bath can be used for Ni-plating; for example, nickel chloride bath containing hydrochloric acid (HCl) and nickel chloride (NiCl₂) as major ingredients can be used. Temperature of the Ni-plating bath is set to 15°C or higher and 35°C or lower, current density is set to 1 A/dm² or higher to 10 A/dm² or lower. As stated above, the coating thickness of the Ni-plating layer is set to 0.05 µm or smaller.

The terminal material is formed into a female terminal 2 of a shape shown in FIG. 2, for example.

In the example shown in FIG. 2, the female terminal 2 is formed to have a square-pipe shape as a whole in which an opening part 15 into which a male terminal 1 is fitted and connected is formed at one end of the female terminal 2. The female terminal 2 holds the male terminal 1 by grasping from both sides and is connected to the male terminal 1. In the female terminal 2, an elastically-deformable contact piece 16 which contacts with one surface of the male terminal 1 which is fit-inserted is provided; and on a side wall 17 opposed to the contact piece 16, a semi-spherical protrusion part 18 is formed in an inwardly protruded state by embossing so as to be in contact with the other surface of the male terminal 1. On the contact piece 16, a folded part 19 is formed in a mountain-fold state so as to be opposed to the protrusion part 18. The protrusion part 18 and the folded part 19 are protruded toward the male terminal 1 when the male terminal 1 is fit-inserted and are sliding parts 11 on the male terminal 1.

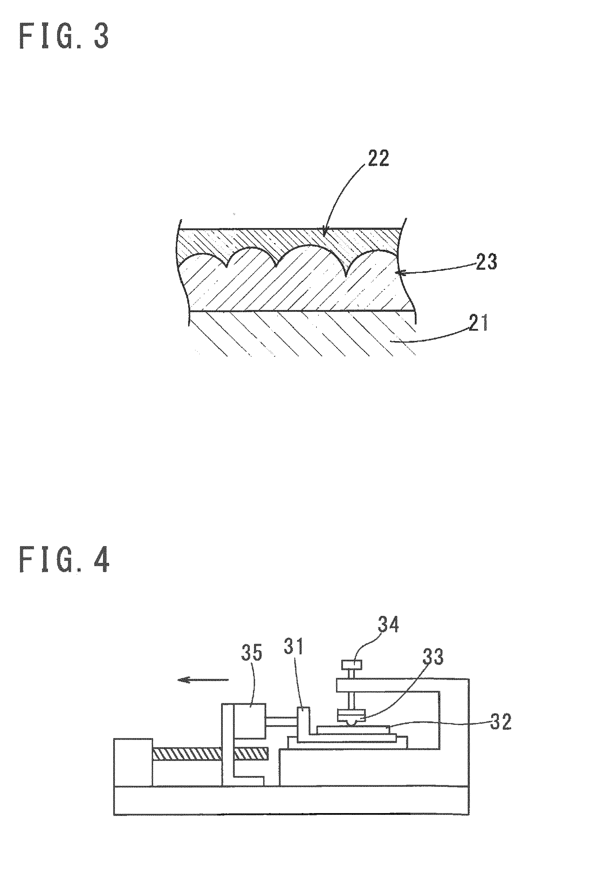

The terminal material used for the male terminal 1 is, as schematically shown by FIG. 3, formed from an ordinary reflow material in which: a Sn-based surface layer 22 is formed on a surface of a base material 21 made from Cu alloy; and a Cu-Sn alloy layer 23 is formed between the Sn-based surface layer and the Cu-alloy base material 21. In this male terminal 1, an oil-sump depth Rvk of the Cu-Sn alloy layer 23 is measured smaller than 0.2 µm, though most of it is about 0.15 µm, and an average thickness of the Sn-based surface layer 22 is 0.2 µm or larger and 3 µm or smaller, when the Sn-based surface layer 22 is fused and removed so that the Cu-Sn alloy layer 23 appears on a surface.

The male terminal 1 is formed in a flat-plate shape, by reflowing after Cu-plating and Sn-plating in order on a copper-alloy plate. In this case, as typical heating condition of reflowing, it is rapidly cooled after being held at temperature of 240°C or higher and 400°C or lower for 1 second or longer and 20 seconds or shorter.

Terminal material can be made for male-terminal material without reflowing but a Sn-based surface layer having an average thickness of 0.5 µm or larger and 3 µm or smaller by Sn-plating on base material of Cu alloy.

In connecters made from these female-terminal material and male-terminal material, the contact piece 16 is elastically deformed to a position indicated by a solid line from a position indicated by a two-dot and dashed line when the male terminal 1 is inserted between the contact piece 16 and the side wall 17 through the opening part 15 of the female terminal 2, so that the male terminal 1 is held by being grasped between the folded part 19 and the protrusion part 18.

As described above, in the female terminal 2: the interface between the Cu-Sn alloy layer and the Sn-based surface layer is formed as precipitous asperity with the oil-sump depth Rvk of 0.2 µm or larger; the average thickness of the Sn-based surface layer is 0.1 µm or larger and 0.6 µm or smaller; and the Ni-based coating layer having the coating thickness of 0.005 µm or larger and 0.05 µm or smaller is formed on the uppermost surface. Accordingly, it can be restrained that Sn adheres to surfaces of the protrusion part 18 and the folded part 19 of the female terminal 2; and the reduction effect of the dynamic friction coefficient can be effectively shown owing to the interface being formed as precipitous asperity between the Cu-Sn alloy layer and the Sn-based surface layer. Therefore, even if the male terminal 1 has a Sn-based surface layer by typical reflowing, the dynamic friction coefficient can be 0.3 or lower.

### EXAMPLES

Test pieces of female terminals were made from a base material of copper alloy having a plate thickness of 0.25 mm (Ni; 0.5 mass% or more and 5 mass% or less-Zn; 1.0 mass%-Sn; 0 mass% or more and 0.5 mass% or less-Si; 0.1 mass% or more and 1.5 mass% or less-Fe; 0 mass% or more and 0.03 mass% or less-Mg; 0.005 mass%). Cu-plating and Sn-plating were carried out on the base material in order, and then the base material was reflowed by heating to a state in which surface temperature of the base material is to 240°C or higher and 360°C or lower, holding for 3 to 15 seconds, and water-cooling. After reflowing, Ni-plating was carried out. As Comparative Examples, base materials in which Ni concentration, Si concentration, Cu-plating thickness, or Sn-plating thicknesses were varied or Ni-plating was not performed were made.

In this case, plating condition of Cu-plating, Sn-plating and Ni-plating were shown in Table 1. In Table 1, Dk indicates current density of a cathode; and ASD is an abbreviation of A/dm².

Thicknesses and reflowing conditions of the plated layers were shown in Table 2.

**[Table 1]**

| | Cu-PLATING | | Sn-PLATING | | Ni-PLATING | |
|---|---|---|---|---|---|---|
| COMPOSITION OF PLATING SOLUTION | COPPER SULFATE | 250g/L | TIN SULFATE | 75g/L | NICKEL CHLORIDE | 240g/L |
| | SULFURIC ACID | 50g/L | SULFURIC ACID | 85g/L | HYDROCHLORIC ACID | 50g/L |
| | | | ADDITIVE | 10g/L | | |
| LIQUID TEMPERATURE | 25°C | | 25°C | | 25°C | |
| Dk | 5 ASD | | 5 ASD | | 2 ASD | |

Regarding each of the test pieces, a thickness of the Sn-based surface layer, a thickness of the Cu-Sn alloy layer, an oil-sump depth Rvk of the Cu-Sn alloy layer, a thickness of the Ni-based coating layer, and presence of the Ni-based coating layer on exposed parts of the Cu-Sn alloy layer were determined after reflowing.

The thickness of the Sn-based surface layer and the thickness of Cu-Sn alloy layer after reflowing, and the thickness of the Ni-based coating layer were measured by a fluorescent X-ray coating thickness gauge (SFT 9400) made by SII Nano Technology Inc.

Regarding the thicknesses of the Sn-based surface layer and the Cu-Sn alloy layer, at first, an entire thickness of the Sn-based surface layer of the test piece before forming the Ni-based coating was measured after reflowing. Next, removing the Sn-based surface layer by soaking in etchant for a few minutes for removing a plating coat which etches pure Sn but do not corrode Cu-Sn alloy such as L80 or the like made by Leybold Co., Ltd., for example, so that the lower Cu-Sn alloy layer was exposed. Then, a conversion thickness of the exposed Cu-Sn alloy layer in terms of pure Sn was measured. The thickness of the Sn-based surface layer was defined by (the entire thickness of the Sn-based surface layer - the conversion thickness of the Cu-Sn alloy layer in terms of pure Sn).

The oil-sump depth Rvk of the Cu-Sn alloy layer was obtained as follows. The Sn-based surface layer was removed by soaking in etchant for removing Sn-plating coat so that the under Cu-Sn alloy layer was exposed. Then, the oil-sump depth Rvk was obtained by an average of values measured at 5 points in a longitudinal direction and 5 points in a transverse direction, 10 points in total, by a laser microscope (VK-X200) made by Keyence Corporation with an object lens having a magnification of 150 (a measuring field 94 µm × 70 µm).

The presence of the Ni-based coating layer on the Cu-Sn alloy layer was verified in the test piece after Ni-plating by exposing a layer under the Ni-based coating layer after removing the Ni-based coating layer by gradually etching a surface by Auger Electron Spectroscopy (AES). Besides, a section of the test piece after Ni-plating was analyzed by Transmission Electron Microscopy (TEM).

**[Table 2]**

| | | COATING THICKNESS OF PLATING LAYER (µm) | | REFLOW CONDITION REFLOW CONDITION | | LAYER THICKNESS AFTER REFLOW (µm) | | OIL-SUMP DEPTH Rvk (µm) | THICKNESS OF Ni-BASED COATING LAYER (µm) | PRESENCE OF Ni-BASED COATING LAYER ON Cu-Sn ALLOY LAYER |
|---|---|---|---|---|---|---|---|---|---|---|
| | | Cu | Sn | TEMPERATURE OF BASE MATERIAL (°C) | HOLDING TIME (s) | Sn | CuSn | | | |
| EXAMPLE 1 | Ni2.0-Zn1.0-Sn0.5-Si0.5-Fe0.03-Mg0.005 mass% | 0.05 | 0.96 | 270 | 6 | 0.43 | 0.76 | 0.31 | 0.005 | YES |
| EXAMPLE 2 | Ni2.0-Zn1.0-Sn0.5-Si0.5-Fe0.03-Mg0.005 mass% | 0.05 | 0.96 | 270 | 6 | 0.43 | 0.76 | 0.31 | 0.01 | YES |
| EXAMPLE 3 | Ni2.0-Zn1.0-Sn0.5-Si0.5-Fe0.03-Mg0.005 mass% | 0.05 | 0.96 | 270 | 6 | 0.43 | 0.76 | 0.31 | 0.02 | YES |
| EXAMPLE 4 | Ni2.0-Zn1.0-Sn0.5-Si0.5-Fe0.03-Mg0.005 mass% | 0.05 | 0.96 | 270 | 6 | 0.43 | 0.76 | 0.31 | 0.03 | YES |
| EXAMPLE 5 | Ni2.0-Zn1.0-Sn0.5-Si0.5-Fe0.03-Mg0.005 mass% | 0.05 | 0.96 | 270 | 6 | 0.43 | 0.76 | 0.31 | 0.05 | YES |
| EXAMPLE 6 | Ni2.0-Zn1.0-Sn0.5-Si0.5-Fe0.03-Mg0.005 mass% | 0.05 | 0.98 | 270 | 9 | 0.27 | 0.94 | 0.36 | 0.01 | YES |
| EXAMPLE 7 | Ni05-Zn1.0-Sn0.5-Si0.5-Fe0.03-Mg0.005 mass% | 0.05 | 0.92 | 270 | 6 | 0.42 | 0.73 | 0.28 | 0.01 | YES |
| EXAMPLE 8 | Ni5.0-Zn1.0-Sn0.5-Si0.5-Fe0.03-Mg0.005 mass% | 0.05 | 0.90 | 270 | 6 | 0.32 | 0.84 | 0.35 | 0.01 | YES |
| EXAMPLE 9 | Ni2.0-Zn1.0-Sn0.5-Si0.1-Fe0.03-Mg0.005 mass% | 0.05 | 0.90 | 270 | 6 | 0.41 | 0.72 | 0.29 | 0.01 | YES |
| EXAMPLE 10 | Ni2.0-Zn1.0-Sn0.5-Si1.5-Fe0.03-Mg0.005 mass% | 0.05 | 0.90 | 270 | 6 | 0.33 | 0.81 | 0.33 | 0.01 | YES |
| EXAMPLE 11 | Ni2.0-Zn1.0-Sn0.5-Si0.5-Fe0.03-Mg0.005 mass% | 0.03 | 0.72 | 245 | 3 | 0.27 | 0.65 | 0.32 | 0.01 | YES |
| EXAMPLE 12 | Ni2.0-Zn1.0-Sn0.5-Si05-Fe0.03-Mg0.005 mass% | 0.05 | 0.92 | 270 | 3 | 0.43 | 0.71 | 0.27 | 0.01 | YES |
| EXAMPLE 13 | Ni2.0-Zn1.0-Sn0.5-Si0.5-Fe0.03-Mg0.005 mass% | 0.05 | 0.90 | 270 | 9 | 0.26 | 0.92 | 0.36 | 0.01 | YES |
| EXAMPLE 14 | Ni2.0-Zn1.0-Sn0.5-Si05-Fe0.03-Mg0.005 mass% | 0.05 | 0.92 | 250 | 6 | 0.42 | 0.72 | 0.32 | 0.01 | YES |
| EXAMPLE 15 | Ni2.0-Zn1.0-Sn0.5-Si0.5-Fe0.03-Mg0.005 mass% | 0.05 | 0.91 | 350 | 6 | 0.28 | 0.91 | 0.32 | 0.01 | YES |
| EXAMPLE 16 | Ni2.0-Zn1.0-Sn0.5-Si0.5-Fe0.03-Mg0.005 mass% | 0.10 | 0.89 | 270 | 9 | 0.23 | 0.95 | 0.35 | 0.01 | YES |
| EXAMPLE 17 | Ni2.0-Zn1.0-Sn0.5-Si0.5-Fe0.03-Mg0.005 mass% | 0.14 | 0.94 | 270 | 12 | 0.32 | 0.90 | 0.24 | 0.01 | YES |
| EXAMPLE 18 | Ni2.0-Zn1.0-Sn0.5-Si0.5-Fe0.03-Mg0.005 mass% | 0.10 | 0.64 | 245 | 6 | 0.22 | 0.60 | 0.22 | 0.01 | YES |
| EXAMPLE 19 | Ni2.0-Zn1.0-Sn0.5-Si0.5-Fe0.03-Mg0.005 mass% | 0.03 | 1.25 | 360 | 12 | 0.57 | 0.98 | 0.39 | 0.01 | YES |
| COMPARATIVE 1 | Ni2.0-Zn1.0-Sn0.5-Si0.5-Fe0.03-Mg0.005 mass% | 0.30 | 0.92 | 270 | 6 | 0.52 | 0.58 | 0.18 | 0 | NO |
| COMPARATIVE 2 | Ni2.0-Zn1.0-Sn0.5-Si0.5-Fe0.03-Mg0.005 mass% | 0.05 | 0.96 | 270 | 6 | 0.43 | 0.78 | 0.31 | 0 | NO |
| COMPARATIVE 3 | Ni2.0-Zn1.0-Sn0.5-Si0.5-Fe0.03-Mg0.005 mass% | 0.05 | 0.96 | 270 | 6 | 0.43 | 0.76 | 0.31 | 0.07 | YES |
| COMPARATIVE 4 | Ni2.0-Zn1.0-Sn0.5-Si0.5-Fe0.03-Mg0.005 mass% | 0.30 | 0.92 | 270 | 6 | 0.52 | 0.58 | 0.18 | 0.01 | NO |
| COMPARATIVE 5 | Ni2.0-Zn1.0-Sn0.5-Si0.5-Fe0.03-Mg0.005 mass% | 0.10 | 0.88 | 270 | 6 | 0.45 | 0.63 | 0.19 | 0.01 | NO |
| COMPARATIVE 6 | Ni2.0-Zn1.0-Sn0.5-Si0.5-Fe0.03-Mg0.005 mass% | 0.40 | 0.35 | 270 | 2 | 0.01 | 0.47 | 0.28 | 0.01 | YES |
| COMPARATIVE 7 | Ni2.0-Zn1.0-Sn0.5-Si0.5-Fe0.03-Mg0.005 mass% | 0.05 | 0.92 | 270 | 12 | 0.08 | 1.03 | 0.38 | 0.01 | YES |
| COMPARATIVE 8 | Ni0.3-Zn1.0-Sn0.5-Si0.5-Fe0.03-Mg0.005 mass% | 0.05 | 0.94 | 270 | 6 | 0.49 | 0.63 | 0.19 | 0.01 | YES |
| COMPARATIVE 9 | Ni2.0-Zn1.0-Sn0.5-Si0.08-Fe0.03-Mg0.005 mass% | 0.05 | 0.92 | 270 | 6 | 0.47 | 0.65 | 0.18 | 0.01 | YES |

As a test piece of male terminal, Cu-plating and Sn-plating were carried out in order on a base material of copper alloy having a plate thickness of 0.25 mm (C2600, Cu: 70 mass%-Zn: 30 mass%), and reflowing was carried out. As reflow condition of the male-terminal material, temperature of the base material was 270°C, holding time was 6 seconds; thickness of the Sn-base surface layer after reflowing was 0.6 µm, and a thickness of the Cu-Sn alloy layer was 0.5 µm.

Dynamic friction coefficient was measured by using the male-terminal test piece and the female-terminal test pieces in Table 2.

The dynamic friction coefficient was obtained by measuring friction force between both test pieces by a friction measuring instrument (µV1000) made by Trinity-Lab Inc. Explaining with reference to FIG. 4, the male-terminal test piece 32 was mounted on a horizontal stage 31; plating surfaces were in contact with each other by arranging a semi-spherical protrusion face of a female-terminal test piece 33 on the male-terminal test piece 32; so that the male-terminal test piece 32 was pressed down by applying a load P of 500 gf (4.9 N) on the female-terminal test piece 33 by a weight 34. In a state in which the load P was applied, the male-terminal test piece 32 was drawn for 10 mm at 80 mm/min of frictional speed in a horizontal direction indicated by an arrow; and friction force F was measured by a load cell 35. The dynamic friction coefficient (= Fav / P) was obtained from an average value Fav of the friction force F and the load P.

As soldering wettability, zero-crossing time was measured on the test piece cut off with 10 mm width by the meniscograph method using active flux. (It was measured by soaking in Sn-3% Ag-0.5% Cu solder of bath temperature 260°C in condition of a soaking rate 2 mm/sec, a soaking depth 1 mm, and a soaking time 10 seconds.) It was judged good if the soldering zero-cross time was 3 seconds or shorter; and it was judged not good if the soldering zero-cross time exceeded 3 seconds.

In order to evaluate electrical reliability, contact resistance was measured after heating at 150°C for 500 hours in the atmosphere. Measuring method was conformed to JIS-C-5402, using a four-terminal contact-resistance test instrument (CRS-1 made by Yamasaki-Seiki Co., Ltd), measuring load variation-contact resistance at 0 to 50 g by sliding (1 mm), and evaluating the contact resistance values when the load was 50 g.

**[Table 3]**

| | DYNAMIC FRICTION COEFFICIENT LOAD 500 gf | SOLDERING WETTABILITY | CONTACT RESISTANCE (mΩ) |
|---|---|---|---|
| EXAMPLE 1 | 0.26 | GOOD | 2.86 |
| EXAMPLE 2 | 0.20 | GOOD | 3.55 |
| EXAMPLE 3 | 0.22 | GOOD | 5.09 |
| EXAMPLE 4 | 0.21 | GOOD | 6.25 |
| EXAMPLE 5 | 0.24 | GOOD | 7.03 |
| EXAMPLE 6 | 0.21 | GOOD | 7.98 |
| EXAMPLE 7 | 0.25 | GOOD | 3.42 |
| EXAMPLE 8 | 0.21 | GOOD | 4.11 |
| EXAMPLE 9 | 0.24 | GOOD | 2.86 |
| EXAMPLE 10 | 0.21 | GOOD | 3.13 |
| EXAMPLE 11 | 0.24 | GOOD | 5.48 |
| EXAMPLE 12 | 0.27 | GOOD | 3.33 |
| EXAMPLE 13 | 0.22 | GOOD | 8.13 |
| EXAMPLE 14 | 0.23 | GOOD | 2.23 |
| EXAMPLE 15 | 0.23 | GOOD | 4.37 |
| EXAMPLE 16 | 0.22 | GOOD | 2.65 |
| EXAMPLE 17 | 0.27 | GOOD | 2.48 |
| EXAMPLE 18 | 0.28 | GOOD | 8.67 |
| EXAMPLE 19 | 0.24 | GOOD | 2.12 |
| COMPARATIVE 1 | 0.39 | GOOD | 2.18 |
| COMPARATIVE 2 | 0.33 | GOOD | 2.51 |
| COMPARATIVE 3 | 0.27 | NOT GOOD | 9.21 |
| COMPARATIVE 4 | 0.32 | GOOD | 2.32 |
| COMPARATIVE 5 | 0.32 | GOOD | 2.27 |
| COMPARATIVE 6 | 0.28 | NOT GOOD | 15.48 |
| COMPARATIVE 7 | 0.29 | NOT GOOD | 14.21 |
| COMPARATIVE 8 | 0.33 | GOOD | 3.25 |
| COMPARATIVE 9 | 0.32 | GOOD | 2.89 |

As obvious from Table 3, in all Examples, the dynamic friction coefficient was small as 0.3 or smaller, and it was shown that the soldering wettability and the contact resistance were excellent.

On the other hand, in Comparative Examples, there were defects as followings.

In Comparative Examples 1 and 2, the dynamic friction coefficient was large since there was not the Ni-based coating layer. In Comparative Example 3, the soldering wettability or the contact resistance were deteriorated since the coating thickness of the Ni-based coating layer was large. In Comparative Examples 4 and 5, the effects was not large only by carrying out Ni-plating on all-purpose tin-plating material with low Rvk though reduction effect could slightly be obtained. In Comparative Examples 6 and 7, the Cu-Sn alloy layer grew too large; and the Sn-based surface layer remained on a surface was too small, so that the soldering wettability or the contact resistance were deteriorated. In Comparative Examples 8 and 9, an amount of additional element was not enough for facilitating growth of the Cu-Sn alloy layer, so that a large effect could not be obtained since the oil-sump depth Rvk was not enough.

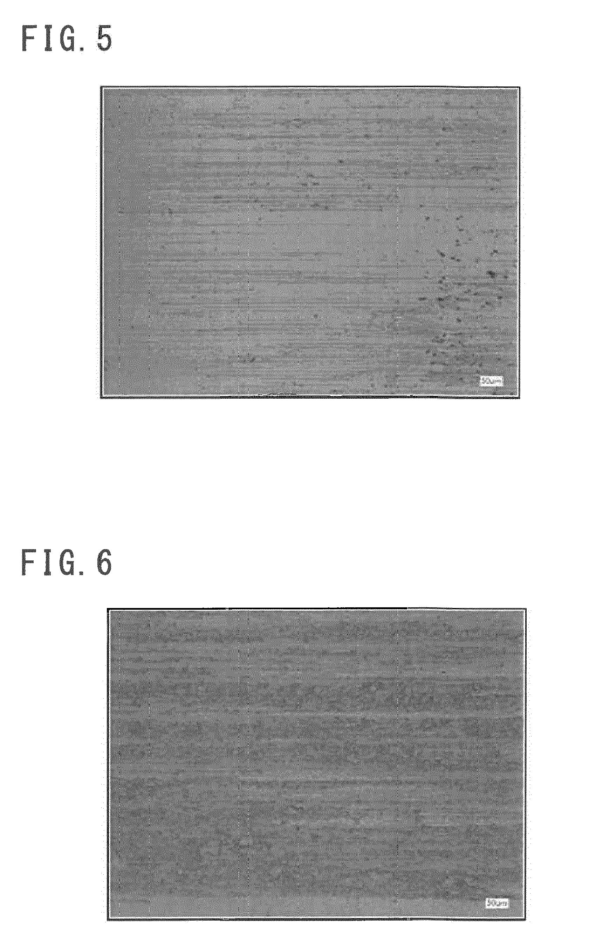

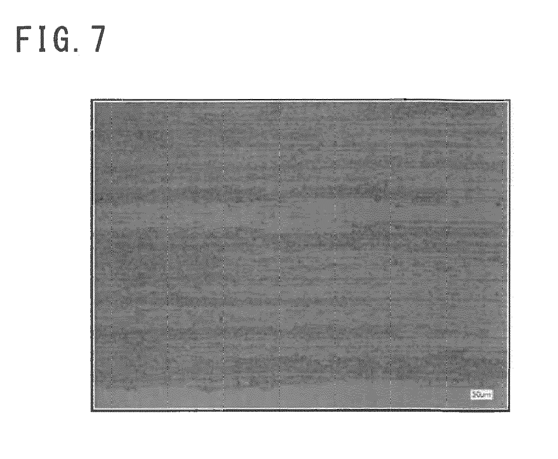

FIG. 5 is a photomicrograph of a sliding surface of the male-terminal test piece after measuring the dynamic friction coefficient of Example 5. FIG. 6 is a photomicrograph of Comparative Example 1. FIG. 7 is a photomicrograph of Comparative Example 2. As known by comparison between these photographs, Sn was prevented from adhering so that the sliding surface was smooth in Example; in contrast, the sliding surface in Comparative Example is rough since Sn adhered. In Comparative Example 1 in which Rvk at the female was especially small, Sn extremely adhered, so that the sliding surface became rougher.

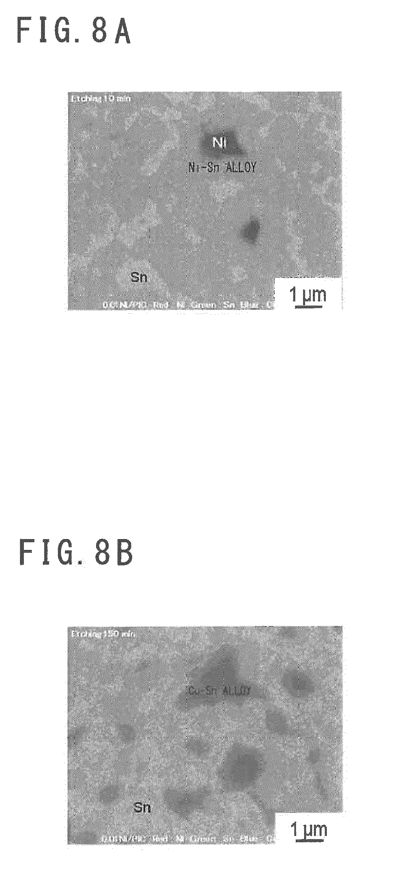

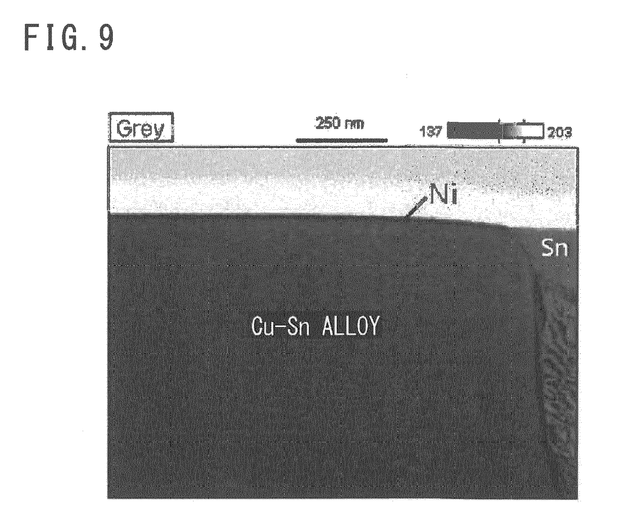

In FIG. 8A which is a photograph showing a result of an element distribution by AES of Example 2 after removing oxide on the surface by etching, there are only Sn, Ni and Ni-Sn alloy on the uppermost surface. In FIG. 8B showing a result of an element distribution by AES of Example 2 after etching for 150 minutes, the Cu-Sn alloy layer appears from Ni and the Ni-Sn alloy layer. FIG. 9 is a cross-sectional photograph by TEM analysis of Example 2. It can be found that the Ni-based coating layer does not exist on the Sn-based surface layer if the coating thickness of the Ni-based coating layer is extremely small as 0.01 µm, but the Ni-based coating layer is formed preferentially on the Cu-Sn alloy layer.

## Claims

1. Tin-plated copper-alloy terminal material comprising:
a base material made of Cu alloy;
a Sn-based surface layer being formed on a surface of the base material and having an average thickness of 0.2 µm or larger and 0.6 µm or smaller;
a Cu-Sn alloy layer generated between the Sn-based surface layer and the base material; and
a Ni-based coating layer being formed of Ni or Ni-Sn alloy at an uppermost surface and having a coating thickness of 0.005 µm or larger and 0.05 µm or smaller, wherein
dynamic friction coefficient of the surface is 0.3 or lower; and
an oil-sump depth Rvk of the Cu-Sn alloy layer measured when the Cu-Sn alloy layer is appeared on a surface by fusing and removing the Sn-based surface layer is 0.2 µm or larger.

2. The tin-plated copper-alloy terminal material according to Claim 1, wherein
a part of the Cu-Sn alloy layer is exposed from the Sn-based surface layer; and
the Ni-based coating layer is formed on the Cu-Sn alloy layer exposed from the Sn-based surface layer.

3. The tin-plated copper-alloy terminal material according to Claim 1, wherein an average thickness of the Cu-Sn alloy layer is 0.6 µm or larger and 1 µm or smaller.

4. The tin-plated copper-alloy terminal material according to Claim 1, wherein
the base material comprises 0.5 mass% or more and 5 mass% or less of Ni and 0.1 mass% or more and 1.5 mass% or less of Si, and further comprises as necessary one or more selected from a group consisting of Zn, Sn, Fe, and Mg at 5 mass% or less in total, and the balance Cu with inevitable impurities.
